(19) Europäisches Patentamt
European Patent Office
Office européen des brevets

(11) **EP 2 467 610 B1**

(12) **EUROPÄISCHE PATENTSCHRIFT**

(45) Veröffentlichungstag und Bekanntmachung des Hinweises auf die Patenterteilung:
**20.11.2013  Patentblatt 2013/47**

(21) Anmeldenummer: **10760233.6**

(22) Anmeldetag: **05.08.2010**

(51) Int Cl.:
***F16D 13/75*** *(2006.01)*

(86) Internationale Anmeldenummer:
**PCT/DE2010/000935**

(87) Internationale Veröffentlichungsnummer:
**WO 2011/020460 (24.02.2011 Gazette 2011/08)**

(54) **KUPPLUNGSAGGREGAT MIT ZUMINDEST EINER SELBSTNACHSTELLENDEN REIBUNGSKUPPLUNG**

CLUTCH UNIT HAVING AT LEAST ONE SELF-ADJUSTING FRICTION CLUTCH

ENSEMBLE EMBRAYAGE PRÉSENTANT AU MOINS UN EMBRAYAGE À FRICTION À RATTRAPAGE DE JEU AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **20.08.2009   DE 102009038201**

(43) Veröffentlichungstag der Anmeldung:
**27.06.2012   Patentblatt 2012/26**

(73) Patentinhaber: **Schaeffler Technologies AG & Co. KG**
**91074 Herzogenaurach (DE)**

(72) Erfinder:
• VOGEL, Florian
  76534 Baden-Baden (DE)
• RABER, Christoph
  66564 Ottweiler-Steinbach (DE)
• WIEGERT, Michael
  77704 Oberkirch (DE)

(56) Entgegenhaltungen:
DE-A1- 19 844 557     DE-A1-102008 012 865
GB-A- 1 000 968       US-A1- 2003 164 274

## Beschreibung

Die Erfindung betrifft ein Kupplungsaggregat mit zumindest einer selbstnachstellenden Reibungskupplung mit einer drehfest mit einem Kupplungsgehäuse verbundenen Druckplatte und einer axial zu dieser entgegen der Wirkung von gehäusefest angeordneten Blattfedern mittels eines einseitig sich am Kupplungsgehäuse abstützenden Betätigungshebels verlagerbaren, drehfest mit dem Kupplungsgehäuse verbundenen Anpressplatte, einer mittels zwischen der Druckplatte und Anpressplatte angeordneten Reibbelägen mit der zumindest einen Reibungskupplung verspannbaren Kupplungsscheibe und einem zwischen einer Beaufschlagungsfläche des Betätigungshebels und der Anpressplatte angeordneten Rampensystem mit einem in Umfangsrichtung verdrehbaren Verstellring mit in Umfangsrichtung angeordneten Rampen und hierzu an der Druckplatte komplementär angeordneten Gegenrampen.

Gattungsgemäße Kupplungsaggregate mit einer einzelnen selbstnachstellenden Reibungskupplung zur Koppelung einer Brennkraftmaschine mit einem Getriebe oder einer Doppelkupplung mit zwei selbstnachstellenden Reibungskupplungen beispielsweise für jeweils einen Teilantriebsstrang eines Doppelkupplungsgetriebes mit Nachstelleinrichtungen zur Kompensation eines Verschleißes der Reibbeläge über Lebensdauer sind bekannt. Die Verwendung einer Nachstelleinrichtung hat dabei das Ziel, die selbstnachstellende Reibungskupplung in einem vorgegebenen optimalen Arbeitsbereich zu halten, so dass beispielsweise das Betätigungssystem der Reibungskupplung in einem begrenzten Toleranzbereich entsprechend ausgelegt werden kann.

Insbesondere in Doppelkupplungsgetrieben werden aus sicherheitsrelevanten Gründen selbstöffnende, das heißt, vom Betätigungssystem aktiv geschlossene wie zugedrückte oder zugezogene Reibungskupplungen eingesetzt. Für derartige Reibungskupplungen werden beispielsweise weggesteuerte Nachstelleinrichtungen vorgeschlagen, bei denen der Betätigungsweg des Betätigungshebels erfasst und abhängig von einem sich bei Verschleiß ändernden Betätigungsweg eine Nachstellung eingeleitet wird.

In der DE 10 2008 026 421 A1 wird hierzu der Betätigungsweg des Betätigungssystems erfasst. Überschreitet der Betätigungsweg im eingerückten Zustand der Reibungskupplung aufgrund von Verschleiß der Reibbeläge einen vorgegebenen Mehrweg des Betätigungssystems, wird im Betätigungssystem ein schaltbarer Anschlag des Betätigungssystems freigeschaltet, so dass ein Betätigungshebel des Betätigungssystems einen Überweg beschreitet, bei dem in der Reibungskupplung eine Nachstellung eingeleitet wird. Die Schaltung des schaltbaren Anschlags und dessen Rückstellung sowie die Abstimmung des Betätigungssystems auf den Nachstellmechanismus der Reibungskupplung sind dabei aufwendig.

Die DE 10 2008 012 865 A1 offenbart ein Kupplungsaggregat mit einer beziehungsweise zwei zugedrückten Reibungskupplungen, bei denen Verschleiß detektiert wird, wenn der Betätigungsweg des Betätigungssystems um ein vorgegebenes Maß verlängert wird. Dabei wird der sich abhängig vom Betätigungsweg ändernde Umfang einer auf einem Betätigungshebel angeordneten Sensorfeder auf einen Rastmechanismus übertragen, der bei detektiertem Verschleiß mittels eines Schneckenrads den Verstellring um einen vorgegebenen Winkel verdreht, der der Teilung des Rastmechanismus entspricht. Derartige Nachstelleinrichtungen sind wegen der großen Anzahl verwendeter Teile aufwendig und bezüglich der einzuhaltenden Toleranzen nur schwer über Lebensdauer zu beherrschen.

Die DE 198 44 557 offenbart auch ein kupplungsaggregat.

Die Detektion einer Verschleißgrenze einer Reibungskupplung erfolgt in den oben genannten Kupplungsaggregaten mittels einer Erfassung einer Wegbewegung des Betätigungshebels. Dadurch ist die Erkennung von Verschleiß und dessen Kompensation abhängig von der Einbaulage, das heißt, von der Winkellage des Betätigungshebels gegenüber der Anpressplatte. Durch die toleranzbedingt variierende Winkellage verschiebt sich der Startpunkt der Beaufschlagung des Betätigungshebels, wodurch sich für denselben Wegbetrag der Betätigungseinrichtung unterschiedliche Detektionspunkte für Verschleiß und damit unterschiedliche Schaltungen zur Kompensation von Verschleiß ergeben. Zum Ausgleich dieser unterschiedlichen Schaltpunkte muss der Startpunkt des Betätigungshebels auf das Betätigungssystem kalibriert, das heißt eingestellt werden, um eine Verschleißkompensation zu erzielen, die stets bei denselben Ausrückwegen Verschleiß detektiert und kompensiert.

Es ergibt sich daher die Aufgabe, ein Kupplungsaggregat mit zumindest einer selbstnachstellenden Reibungskupplung vorzuschlagen, die einfach aufgebaut ist und zuverlässig Verschleiß detektiert und erkannten Verschleiß über Lebensdauer reproduzierbar nachstellt.

Die Aufgabe wird durch ein Kupplungsaggregat mit zumindest einer selbstnachstellenden Reibungskupplung mit einer drehfest mit einem Kupplungsgehäuse verbundenen Druckplatte und einer axial zu dieser entgegen der Wirkung von gehäusefest angeordneten Blattfedern mittels eines einseitig sich am Kupplungsgehäuse abstützenden Betätigungshebels verlagerbaren, drehfest mit dem Kupplungsgehäuse verbundenen Anpressplatte, einer mittels zwischen der Druckplatte und Anpressplatte angeordneten Reibbelägen mit der zumindest einen Reibungskupplung verspannbaren Kupplungsscheibe und einem zwischen einer Beaufschlagungsfläche des Betätigungshebels und der Druckplatte angeordneten Rampensystem mit einem in Umfangsrichtung verdrehbaren Verstellring mit in Umfangsrichtung angeordneten Rampen und hierzu an der Anpressplatte komplementär angeordneten Gegenrampen, gelöst, wobei im Kupplungsgehäuse axial fest und mittels eines schrittweise schaltenden Freilaufs in eine Drehrichtung verdrehbar ein Sensierelement aufgenommen und mit dem Verstellring in Umfangsrichtung und axial entgegen der Wirkung eines Energiespeichers verbunden ist.

In besonders vorteilhafter Weise eignet sich die vorgeschlagene Nachstelleinrichtung für sogenannte zwangsweise geschlossene Reibungskupplungen, die im kraftfreien, das heißt nicht vom Betätigungssystem beaufschlagten Zustand geöffnet sind (normally open) und die vom Betätigungssystem geschlossen werden. Dabei können diese Reibungskupplungen abhängig von der relativen Anordnung des Betätigungssystems zur Bewegungsrichtung der Anpressplatte sogenannte zugezogene oder zugedrückte Reibungskupplungen sein. Die Betätigung erfolgt dabei mittels eines Betätigungshebels, beispielsweise einer Tellerfeder, einer Hebelfeder oder anderen Hebelelementen, der sich radial außen an dem Kupplungsgehäuse abstützt und radial innen durch das Betätigungssystem, beispielsweise einen Hebeleinrücker, einen hydrostatisch arbeitenden Nehmerzylinder oder dergleichen, axial beaufschlagt wird, so dass der radial dazwischen angeordnete Verstellring die Anpressplatte in Richtung Druckplatte drückt und die Reibbeläge zwischen diesen verspannt werden und damit ein Reibschluss zwischen Druckplatte und Kupplungsscheibe und damit zwischen einer Brennkraftmaschine und einem Getriebe beziehungsweise Teilantriebsstrang eines Doppelkupplungsgetriebes hergestellt wird.

Dabei wird bei jedem Schließvorgang ohne Verschleiß das Sensierelement gegenüber dem Verstellring mitgenommen und axial entgegen der Wirkung des axial wirksamen Energiespeichers verspannt und diese Vorspannung bei der Öffnungsbewegung wieder abgebaut. Überschreitet der Betätigungsweg einen vorgegebenen Wert, schaltet der schrittweise schaltende Freilauf und die Vorspannung bleibt erhalten, wird also gespeichert. Hierdurch wird der Verstellring vorgespannt und sobald dessen Hemmung infolge dessen Vorspannung bei geschlossener Reibungskupplung aufgehoben wird, wenn die Reibungskupplung geöffnet wird, soweit verdreht, bis die Vorspannung des axial wirksamen Energiespeichers zwischen Sensierelement und Verstellring wieder abgebaut ist.

Der schrittweise schaltende Freilauf kann gemäß einem vorteilhaften Ausführungsbeispiel aus einem gehäusefest angeordneten Rampenring mit in Umfangsrichtung angeordneten Rampen und an dem Sensierelement vorgesehenen, an den Rampen aufliegenden Sperrzähnen gebildet sein. Dabei kann durch die Anzahl der Rampen und Sperrzähne die Anzahl der Schritte, das heißt, eine Teilung des Verdrehwinkels zwischen Verstellfeder und Rampenring zwischen zwei Schaltungen des Freilaufs vorgegeben werden. Bei einer Schaltung des Freilaufs tritt jeweils ein Formschluss zwischen einer Rampe des Rampenrings und einem Sperrzahn auf, wobei Sensierelement und Rampenring aufeinander fixiert und der Verstellring vorgespannt werden. Demzufolge bewirkt die Teilung infolge der Auslegung der Rampen- und Gegenrampengeometrie des Rampensystems zwischen Anpressplatte und Betätigungshebel das Maß der Kompensation von Verschleiß, also den axialen Verschleißweg der Anpressplatte.

Es hat sich dabei als vorteilhaft gezeigt, wenn die Anzahl der Rampen und die Anzahl der Sperrzähne ein unteilbares Verhältnis bilden, so dass im Verschleißfall jeweils eine Rampe des Rampenrings und ein Sperrzahn einen Formschluss und damit eine Sperrposition des Freilaufs bilden. Auf diese Weise kann die Teilung gesteigert und die Auflösung einer Verschleißnachstellung verringert werden. In vorteilhafter Weise wird ein über den Umfang wirksamer, der Auflösung entsprechender Teilungsunterschied der Anzahl der Sperrzähne und der Anzahl der Rampen kleiner 1°, vorzugsweise kleiner 0,4° eingestellt. Ein Teilungsunterschied t von 0,39° entspricht nach folgendem Zusammenhang

$$t = 360°/n - 360°/m$$

einer Anzahl n von 30 Sperrzähnen und einer Anzahl m von 31 Rampen. Werden beispielsweise 19 Sperrzähne und 20 Rampen des Rampenrings über den Umfang verteilt, entspricht der Teilungsunterschied t einem Wert von 0,95°.

Das Sensierelement kann dabei aus einer axial elastischen Verstellfeder gebildet sein. Diese bildet den axial wirksamen Energiespeicher, so dass auf weitere Bauteile zur Darstellung des axial wirksamen Energiespeichers verzichtet werden kann. Weiterhin können die Sperrzähne aus radial erweiterten Armen der Verstellfeder gebildet sein. Der axial wirksame Energiespeicher kann aus aus der Verstellfeder ausgestellten, über den Umfang verteilten, in Umfangsrichtung ausgerichteten und mit dem Rampenring verbundenen Blattfedern gebildet sein, die die Anbindung der Verstellfeder an den Verstellring bilden. Hierzu können an dem Verstellring entsprechende Öffnungen oder Ösen vorgesehen sein, an denen die Blattfedern vernietet werden.

Durch das Ausstellen der Blattfedern aus der Verstellfeder kann in vorteilhafter Weise die Anzahl der für eine Nachstelleinrichtung zur selbstständigen Nachstellung einer Reibungskupplung notwendigen Teile auf zwei bewegliche Teile beschränkt werden. Der Rampenring ist dabei als erstes bewegliches Teil auf in der Anpressplatte eingearbeiteten Gegenrampen verdrehbar angeordnet. Das Sensierelement in Form der Verstellfeder ist an dem Kupplungsgehäuse abgestützt, die Sperrzähne bilden mit dem in das Kupplungsgehäuse eingearbeiteten Rampenring den schrittweise schaltenden Freilauf.

Durch die spezielle Ausgestaltung der vorgeschlagenen Nachstelleinrichtung ist die Detektion eines Verschleißes unabhängig von der Stellung des Betätigungshebels möglich. Da der Betätigungsweg der Reibungskupplung direkt an der Anpressplatte beziehungsweise dem Verstellring erfasst wird, ist die Stellung des Betätigungshebels, beispielsweise dessen Winkellage gegenüber dem Verstellring unerheblich. Es braucht daher keine Anpassung des Betätigungssystems an die Winkellage des Betätigungshebels beziehungsweise eine Einstellung einer korrekten Winkellage vorgenommen werden.

Gemäß ist ein Kupplungsaggregat mit zwei Reibungskupplungen mit einer gemeinsamen, mit an deren gegenüberliegenden Seiten angeordneten, von jeweils einer Anpressplatte verspannbaren Reibbelägen jeweils einer Kupplungsscheibe vorgesehen, wobei beide Reibungskupplungen selbstständig öffnende Reibungskupplungen sind und eine der Reibungskupplungen eine zugedrückte und eine Reibungskupplung eine zugezogene Reibungskupplung ist.

Die Erfindung wird anhand der in den Figuren 1 bis 4 dargestellten Ausführungsbeispiele näher erläutert. Dabei zeigen:

Figur 1    eine schematisch Darstellung eines Kupplungsaggregats mit einer Reibungskupplung im Teilschnitt,

Figur 2    eine Teilansicht eines schrittweise schaltenden Freilaufs,

Figur 3    eine Verstellfeder in Ansicht und

Figur 4    ein Prinzipschaltbild einer selbstnachstellenden Reibungskupplung.

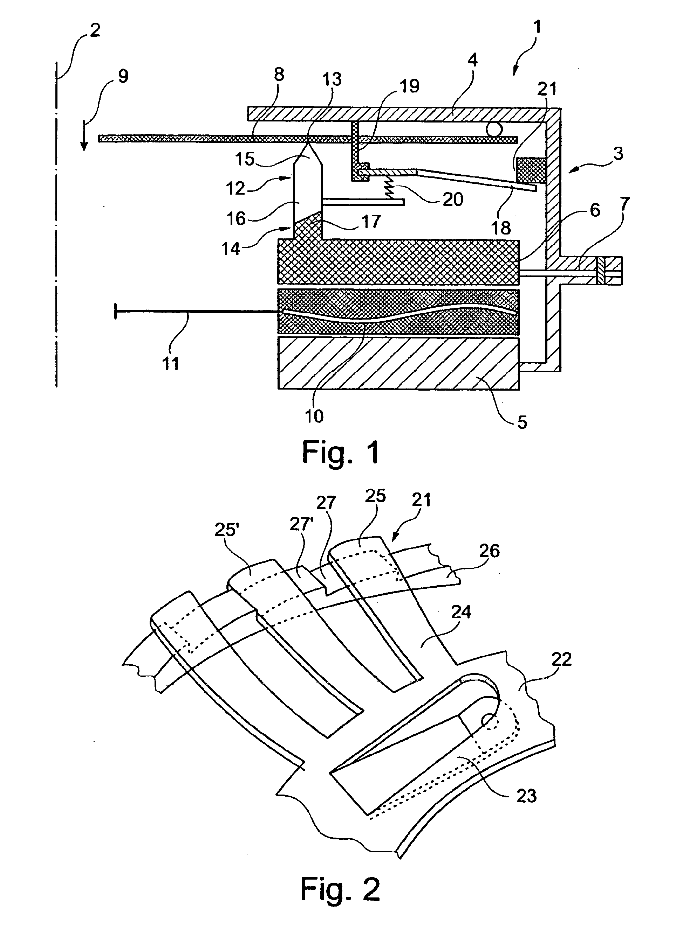

Figur 1 zeigt in schematischer Darstellung eines Teils des um die Drehachse 2 verdrehbar angeordneten Kupplungsaggregats 1 im Schnitt. Das Kupplungsaggregat 1 enthält die Reibungskupplung 3, die das beispielsweise von einer Kurbelwelle einer Brennkraftmaschine angetriebene Kupplungsgehäuse 4 enthält. Das Kupplungsgehäuse 4 nimmt die Druckplatte 5, die auch direkt mit der Kurbelwelle als Schwungrad verbunden oder als primäre Schwungmasse eines geteilten Schwungrads ausgebildet sein kann, auf. Die Anpressplatte 6 ist mittels der Blattfedern 7 axial verlagerbar und drehfest mit der Druckplatte 5 beziehungsweise dem Kupplungsgehäuse 4 verbunden und wird von dem Betätigungshebel 8, der in Form einer Hebelfeder, Tellerfeder oder einzelner Beaufschlagungshebel ausgebildet sein kann, axial verlagert. Der Betätigungshebel 8 stützt sich radial außen am Kupplungsgehäuse 4 ab und wird radial innen mittels eines nicht dargestellten Betätigungssystems in Richtung des Pfeils 9 beaufschlagt, um die Anpressplatte 6 in Richtung der Druckplatte 5 zu verlagern und damit einen Reibschluss der Reibbeläge 10 der Kupplungsscheibe 11, die radial innen getriebeseitig verbunden ist, mit Druckplatte 5 und Anpressplatte 6 zu erzielen und damit die Reibungskupplung 3 zu schließen. Es handelt sich daher um eine selbstöffnende, zugedrückte Reibungskupplung 3.

Über Lebensdauer nimmt durch Abrieb die Stärke der Reibbeläge 10 ab, sodass sich Druckplatte 5 und Anpressplatte 6 unter Aufstellung des Betätigungshebels 8 im geschlossenen Zustand der Reibungskupplung 3 annähern. Um diesen Zustand, der mit einer Auslegung des Betätigungssystems an den kompletten Verschleißbereich mit sich ändernden Betätigungswegen und -kräften verbunden wäre, zu vermeiden, ist die Reibungskupplung 3 selbstnachstellend ausgeführt, die die Abnahme der Stärke der Reibbeläge 10 mittels der Nachstelleinrichtung 12 kompensiert. Hierzu ist zwischen der Auflagefläche 13 des Betätigungshebels 8 und der Anpressplatte 6 das Rampensystem 14 angeordnet, das aus dem verdrehbar ausgebildeten Verstellring 15 mit über den Umfang verteilten und in Umfangsrichtung ausgebildeten Rampen 16 und hierzu an der Anpressplatte 6 angeordneten, zu den Rampen 16 komplementären Gegenrampen 17 gebildet ist.

Zur Detektion von Verschleiß der Reibbeläge 10 ist an dem Kupplungsgehäuse 4 mittels Befestigungsmitteln 19, beispielsweise Bolzen oder Haken, das Sensierelement 18 verdrehbar aufgenommen und mittels des Energiespeichers 20 mit dem Verstellring 15 verbunden. Die Verdrehbarkeit des Sensierelements 18 wird durch den schrittweise schaltenden Freilauf 21 gesteuert. Dabei bewirkt der Energiespeicher 20 zugleich eine hubabhängige Relativverdrehung des Sensierelements 18 gegenüber dem Kupplungsgehäuse 4.

Die Funktion der Nachstelleinrichtung 12 ergibt sich aus einer wegabhängigen Schaltung des Freilaufs 21. Bewegt sich der Hub der Anpressplatte 6 im nicht verschleißbehafteten Betriebszustand innerhalb vorgegebener Werte, pendelt das Sensierelement zwischen Verdrehwinkeln, die dem geöffneten und dem geschlossenen Zustand der Reibungskupplung zugeordnet werden können. Vermindert sich die Stärke der Reibbeläge 10 und nimmt daher der Hub der Anpressplatte 6 in Richtung Druckplatte 5 zu, überschreitet das Sensierelement 18 eine vorgegebene Schaltschwelle des Freilaufs 21 und wird in dieser Position unter axialer und in Umfangsrichtung wirksamer Vorspannung des Energiespeichers 20 fixiert. Eine Verschleißstellung wird hierdurch detektiert. Die Nachstellung des Verstellrings 15 erfolgt durch Abbau der Vorspannung des Sensierelements 18 gegenüber dem Verstellring 15 in Umfangsrichtung während eines Ausrückvorgangs der Reibungskupplung 1, sobald die axiale Vorspannung des Verstellrings 15 durch den Betätigungshebel 8 gegenüber der Anpressplatte 6, die wiederum gegenüber der Druckplatte 5 verspannt ist, nachlässt.

Eine konstruktive Ausgestaltung der Nachstelleinrichtung 12 der Reibungskupplung 3 kann mittels eines Sensierelements 18 erfolgen, das als Verstellfeder 22 ausgestaltet ist und in Figur 2 in einer teilweisen Ansicht dargestellt ist. Unter Bezug auf Figur 1 und deren Bezugszeichen ist in Figur 2 das Sensierelement 18 als Verstellfeder 22 ausgestaltet, die mittels über den Umfang verteilter und in Umfangsrichtung ausgerichteter Blattfedern 23 mit dem Verstellring 15 verbunden ist. Die Blattfedern 23 wirken dabei als Energiespeicher 20 und werden bei einem Hub der Anpressplatte 6 während einer Schließbewegung der Reibungskupplung 3 vom Verstellring 15 axial verspannt, da die Verstellfeder 22 am Kupplungsgehäuse 4 axial festgelegt ist. Durch die Längung der Blattfedern 23 während des Hubs verkürzen sich diese in Umfangsrichtung, so dass die Verstellfeder 22 im Uhrzeigersinn um einen Verdrehwinkel, der proportional zum Hub ist, verdreht wird.

Die Verstellfeder 22 besitzt radial erweiterte, über den Umfang verteilte Arme 24 mit Sperrzähnen 25, die auf dem gehäusefest am Kupplungsgehäuse 4 angeordneten Rampenring 26 mit den in Umfangsrichtung ausgerichteten Rampen 27 angelegt sind und damit den schrittweise schaltenden Freilauf 21 bilden. Die Teilung der Rampen 27 und Sperrzähne 25 ist so ausgelegt, dass zumindest ein Sperrzahn 25' mit einer Rampe 27' einen Formschluss bildet und damit auch bei nicht detektiertem Verschleiß eine Rückdrehung der Verstellfeder 22 gegen den Uhrzeigersinn verhindert wird. In dem gezeigten Ausführungsbeispiel werden beispielsweise einunddreißig Rampen 27 und dreißig Sperrzähne 25 über den Umfang angeordnet, so dass eine Auflösung des Verdrehwinkels von 0,35° erzielt wird, der Freilauf 21 also bei Verdrehwinkeln von 0.35° jeweils schaltet.

Hieraus ergibt sich die Auflösung der Schaltschwelle für eine Verschleißnachstellung. Vergrößert sich der Hub der Anpressplatte 6 aufgrund von Verschleiß der Reibbeläge 10 auf ein Maß, das größer als die Teilungsdifferenz wie Auflösung des Verdrehwinkels - hier 0,35° - ist, verrastet ein Sperrzahn 25 mit einer Rampe 27 bei gegenüber dem Verstellring 15 vorgespannter Verstellfeder 22. Diese stützt die dabei gebildete Vorspannkraft über die Rampe 27 und den Rampenring 26 am Kupplungsgehäuse 4 ab. Der Verstellring 15 ist während der Detektion des Verschleißes bei maximalem Hub der Anpressplatte und maximaler Belastung durch den Betätigungshebel 8 in seiner Verdrehung gehemmt und stützt die Vorspannkraft in Umfangsrichtung solange ab, solange die Reibungskupplung eingerückt ist. Wird die Reibungskupplung 3 wieder ausgerückt, wird die Betätigungskraft am Betätigungshebel 8 durch das Betätigungssystem abgesenkt und bei Erreichen des Kräftegleichgewichts zwischen der auf den Verstellring wirkenden Vorspannkraft der Verstellfeder der auf den Verstellring 15 wirkenden Betätigungskraft, die eine Klemmung der Rampen 16 des Verstellrings auf den Gegenrampen 17 der Anpressplatte 6 bewirkt, erfolgt eine Verdrehung des Verstellrings 15 und damit eine Kompensation des Verschleißes der Reibbeläge 10 der Kupplungsscheibe 11 durch eine Relativverdrehung der Rampen 16 und Gegenrampen 17 mit einer damit verbundenen axialen Abstandserhöhung zwischen Anpressplatte 6 und Betätigungshebel 8.

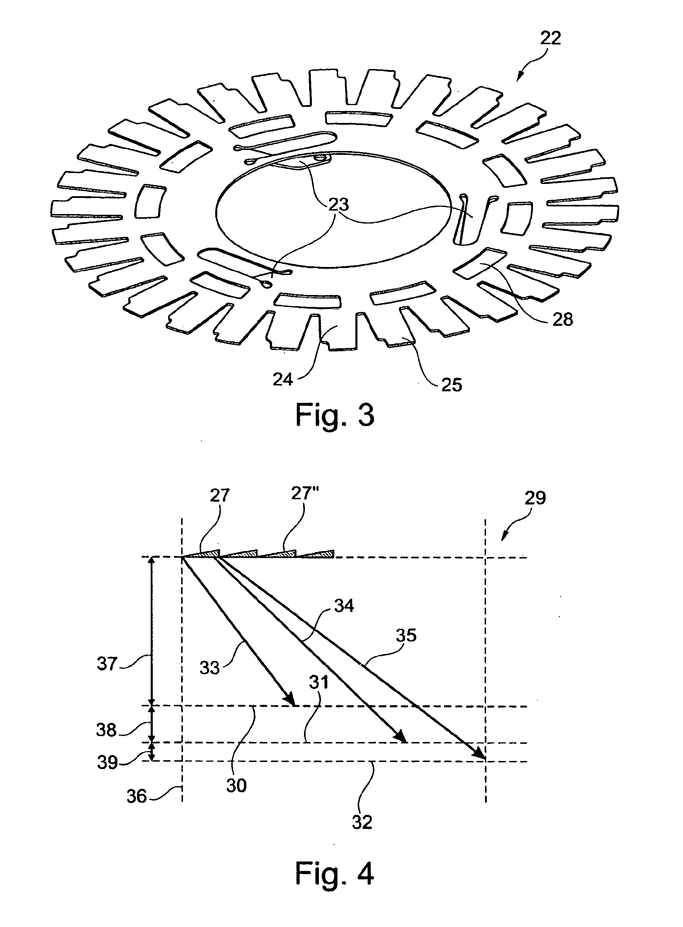

Figur 3 zeigt die Verstellfeder 22 in Ansicht mit den über den Umfang verteilten und in Umfangsrichtung ausgerichteten Blattfedern 23 und den über den Umfang verteilten Armen 24 mit den Sperrzähnen 25. Die über den Umfang verteilten Ausnehmungen 28 dienen der Gewichtsersparnis beziehungsweise der Einstellung der axialen Steifigkeit der Verstellfeder 22. Die Verstellfeder 22, die Arme 24 mit den Sperrzähnen 25 sowie die Blattfedern 23 sind in dem gezeigten Ausführungsbeispiel einteilig, vorzugsweise werkzeugfallend aus Blech hergestellt. Härteverfahren zumindest zum partiellen Härten der Blattfedern 23 und der Sperrzähne 25 können sich dem Stanzprozess zur Herstellung der Verstellfeder 22 anschließen.

Figur 4 zeigt das Prinzipschema 29 der Funktion der Nachstelleinrichtung 12 der Reibungskupplung 3 der Figur 1 unter Bezug auf die Bauteile der Figuren 1 und 2 und deren Bezugszeichen. Aus dem Prinzipschema 29 ist die Stellung der Sperrzähne 25 bei den relevanten Betriebszuständen der Reibungskupplung 3 ersichtlich. Die gestrichelte Linie 30 gibt dabei die Position des Verstellrings 15 bei geöffneter, nicht vom Betätigungshebel 8 beaufschlagter Anpressplatte 6 am Startpunkt 36 der Verstellfeder 22 an. Der Kraftvektor der Blattfeder 23 ist in diesem Zustand kraftfrei und weder axial noch in Umfangsrichtung vorgespannt. Der Abstand 37 gibt daher die Vorwellhöhe der Verstellfeder 22 beziehungsweise der Blattfedern 23 an. Am Startpunkt 36 ist zumindest ein Sperrzahn 25 formschlüssig mit einer Rampe 27 verbunden um eine Rückstellung der Verstellfeder 22 und damit des Verstellrings 15 zu vermeiden.

Die gestrichelte Linie 31 gibt die Position des Verstellrings 15 bei eingerückter, nicht verschleißbehafteter Reibungskupplung 3 wieder, der Abstand 38 zeigt den Einrückweg wie Hub der Reibungskupplung 3 bei nicht verschlissenen Reibbelägen 10 beziehungsweise im aktuell nachgestellten Zustand nach einer Verschleißnachstellung. Im dargestellten eingerückten Zustand werden die Blattfedern 23 axial und in Umfangsrichtung vorgespannt, so dass der Kraftvektor 34 zunimmt und eine Verdrehung der Verstellfeder 22 mit einer damit verbundenen Verlagerung der Sperrzähne 25 auf den Rampen 27 eintritt, die jedoch nicht zu einem Einrasten in eine neue Rampe 27 mit einem damit verbundenen Formschluss führen. Vielmehr kehrt die Verstellfeder 22 in ihre Ursprungslage der Startposition 36 zurück. Mit zunehmendem Verschleiß der Reibbeläge 10 nähert sich die Linie 31 der Linie 32, die den Verschleiß- wie Schaltzustand der Nachstelleinrichtung signalisiert. Durch die Erhöhung des Hubs des Verstellrings 15, gezeigt als Abstand 39 gegenüber dem eingerückten Zustand der Reibungskupplung ohne Verschleiß oder im frisch nachgestellten Zustand, werden die Blattfedern 23 gemäß dem Kraftvektor 35 maximal axial und in Umfangsrichtung vorgespannt, was zu einer Verdrehung der Verstellfeder 22 führt, die zu einem Verrasten eines Sperrzahns 25 mit einer neuen Rampe 27" führt, so dass die Vorspannung beim erneuten Öffnen der Reibungskupplung erhalten bleibt und durch Verdrehen des Verstellrings 15 abgebaut wird.

**Bezugszeichenliste**

| | |
|---|---|
| 1 | Kupplungsaggregat |
| 2 | Drehachse |
| 3 | Reibungskupplung |
| 4 | Kupplungsgehäuse |
| 5 | Druckplatte |
| 6 | Anpressplatte |
| 7 | Blattfeder |
| 8 | Betätigungshebel |
| 9 | Pfeil |
| 10 | Reibbelag |
| 11 | Kupplungsscheibe |
| 12 | Nachstelleinrichtung |
| 13 | Auflagefläche |
| 14 | Rampensystem |
| 15 | Verstellring |
| 16 | Rampe |
| 17 | Gegenrampe |
| 18 | Sensierelement |
| 19 | Befestigungsmittel |
| 20 | Energiespeicher |
| 21 | Freilauf |
| 22 | Verstellfeder |
| 23 | Blattfeder |
| 24 | Arm |
| 25 | Sperrzahn |
| 25' | Sperrzahn |
| 26 | Rampenring |
| 27 | Rampe |
| 27' | Rampe |
| 27" | Rampe |
| 28 | Ausnehmung |
| 29 | Prinzipschema |
| 30 | Linie |
| 31 | Linie |
| 32 | Linie |
| 33 | Kraftvektor |
| 34 | Kraftvektor |
| 35 | Kraftvektor |
| 36 | Startpunkt |
| 37 | Abstand |
| 38 | Abstand |
| 39 | Abstand |

**Patentansprüche**

1. Kupplungsaggregat (1) mit zumindest einer selbstnachstellenden Reibungskupplung (3), mit einem Kupplungsgehäuse (4), mit einer drehfest mit diesem verbundenen Druckplatte (5) und einer axial zu dieser entgegen der Wirkung von gehäusefest angeordneten Blattfedern (7) mittels eines einseitig sich am Kupplungsgehäuse (4) abstützenden Betätigungshebels (8) verlagerbaren, drehfest mit dem Kupplungsgehäuse (4) verbundenen Anpressplatte (6), einer mittels zwischen der Druckplatte (5) und Anpressplatte (6) angeordneten Reibbelägen (10) mit der zumindest einen Reibungskupplung (3) verspannbaren Kupplungsscheibe (11) und einem zwischen einer Auflagefläche (13) des Betätigungshebels (8) und der Druckplatte (5) angeordneten Rampensystem (14) mit einem in Umfangsrichtung verdrehbaren Verstellring (15) mit in Umfangsrichtung angeordneten Rampen (16) und hierzu an der Anpressplatte (6) komplementär angeordneten Gegenrampen (17), **dadurch gekennzeichnet, dass** im Kupplungsgehäuse (4) axial fest und mittels eines schrittweise schaltenden Freilaufs (21) in eine Drehrichtung verdrehbar ein Sensierelement (18) aufgenommen und mit dem Verstellring (15) axial und in Umfangsrichtung entgegen der Wirkung eines Energiespeichers (20) verbunden ist.

**2.** Kupplungsaggregat (1) nach Anspruch 1, **dadurch gekennzeichnet, dass** zumindest eine Reibungskupplung (3) eine mittels des Betätigungshebels zugedrückte oder zugezogene Reibungskupplung (3) ist.

**3.** Kupplungsaggregat (1) nach Anspruch 1 oder 2, **dadurch gekennzeichnet, dass** der Freilauf (21) aus einem gehäusefest angeordneten Rampenring (26) mit in Umfangsrichtung angeordneten Rampen (27) und an dem Sensierelement (18) vorgesehenen, an den Rampen (27) aufliegenden Sperrzähnen (25) gebildet ist.

**4.** Kupplungsaggregat (1) nach Anspruch 3, **dadurch gekennzeichnet, dass** die Anzahl der Rampen (27) und die Anzahl der Sperrzähne (25) ein unteilbares Verhältnis bilden.

**5.** Kupplungsaggregat (1) nach Anspruch 4, **dadurch gekennzeichnet, dass** ein über den Umfang wirksames Teilungsverhältnis der Anzahl der Sperrzähne (25) und der Anzahl der Rampen (27) kleiner 1°, vorzugsweise kleiner 0,4° beträgt.

**6.** Kupplungsaggregat (1) nach einem der Ansprüche 3 bis 5, **dadurch gekennzeichnet, dass** in jeder Betriebsposition der zumindest einen Reibungskupplung (3) zumindest ein Sperrzahn (25) gegenüber einer Rampe (27) in einer Sperrposition angeordnet ist.

**7.** Kupplungsaggregat (1) nach einem der Ansprüche 1 bis 6, **dadurch gekennzeichnet, dass** das Sensierelement (18) aus einer Verstellfeder (22) gebildet ist.

**8.** Kupplungsaggregat (1) nach Anspruch 7, **dadurch gekennzeichnet, dass** die Sperrzähne (25) aus radial erweiterten Armen (24) der Verstellfeder (22) gebildet sind.

**9.** Kupplungsaggregat (1) nach Anspruch 7 oder 8, **dadurch gekennzeichnet, dass** der axial zwischen Verstellring (15) und Sensierelement (18) wirksame Energiespeicher (20) aus aus der Verstellfeder (22) ausgestellten, über den Umfang verteilten, in Umfangsrichtung ausgerichteten und mit dem Verstellring (15) verbundenen Blattfedern (23) gebildet ist.

**10.** Kupplungsaggregat (1) nach einem der Ansprüche 1 bis 9, **dadurch gekennzeichnet, dass** eine Detektion eines Verschleißzustandes unabhängig von einer Wegbewegung des Betätigungshebels (8) erfolgt.

**Claims**

**1.** Clutch assembly (1) having at least one self-adjusting friction clutch (3), having a clutch housing (4), having a pressure plate (5) which is connected fixedly to the latter so as to rotate with it, and a pressing plate (6) which is connected fixedly to the clutch housing (4) so as to rotate with it and can be displaced axially with respect to the said pressure plate (5), counter to the action of leaf springs (7) which are arranged in a fixed manner on the housing, by means of an actuating lever (8) which is supported on one side on the clutch housing (4), a clutch plate (11) which can be clamped with the at least one friction clutch (3) by means of friction linings (10) which are arranged between the pressure plate (5) and the pressing plate (6), and a ramp system (14) which is arranged between a bearing face (13) of the actuating lever (8) and the pressure plate (5) with an adjusting ring (15) which can be rotated in the circumferential direction with ramps (16) which are arranged in the circumferential direction and mating ramps (17) which are arranged in a complementary manner thereto on the pressing plate (6), **characterized in that** a sensing element (18) is received in the clutch housing (4) in an axially fixed manner and such that it can be rotated in a rotational direction by means of a freewheel (21) which switches in a stepped manner, and is connected to the adjusting ring (15) axially and in the circumferential direction counter to the action of an energy store (20).

**2.** Clutch assembly (1) according to Claim 1, **characterized in that** at least one friction clutch (3) is a friction clutch (3) which is pressed or pulled closed by means of the actuating lever.

**3.** Clutch assembly (1) according to Claim 1 or 2, **characterized in that** the freewheel (21) is formed from a ramp ring (26) which is arranged in a fixed manner on the housing with ramps (27) which are arranged in the circumferential direction and locking teeth (25) which are provided on the sensing element (18) and rest on the ramps (27).

**4.** Clutch assembly (1) according to Claim 3, **characterized in that** the number of ramps (27) and the number of locking teeth (25) form an indivisible ratio.

**5.** Clutch assembly (1) according to Claim 4, **characterized in that** a pitch ratio, active over the circumference, of the number of locking teeth (25) and the number of ramps (27) is smaller than 1°, preferably smaller than 0.4°.

**6.** Clutch assembly (1) according to one of Claims 3 to 5, **characterized in that**, in every operating position of the at least one friction clutch (3), at least one locking tooth (25) is arranged in a locking position with respect to a ramp (27).

**7.** Clutch assembly (1) according to one of Claims 1 to 6, **characterized in that** the sensing element (18) is formed from an adjusting spring (22).

**8.** Clutch assembly (1) according to Claim 7, **characterized in that** the locking teeth (25) are formed from radially widened arms (24) of the adjusting spring (22).

**9.** Clutch assembly (1) according to Claim 7 or 8, **characterized in that** the energy store (20) which is active axially between the adjusting ring (15) and the sensing element (18) is formed from leaf springs (23) which protrude from the adjusting spring (22), are distributed over the circumference, are oriented in the circumferential direction and are connected to the adjusting ring (15).

**10.** Clutch assembly (1) according to one of Claims 1 to 9, **characterized in that** a detection of a wear state takes place independently of a displacement movement of the actuating lever (8).

**Revendications**

**1.** Ensemble embrayage (1) présentant au moins un embrayage à friction (3) à rattrapage de jeu automatique, comprenant un boîtier d'embrayage (4) pourvu d'un plateau de pression (5) relié de manière solidaire en rotation à celui-ci et comprenant un plateau de pressage (6) relié de manière solidaire en rotation au boîtier d'embrayage (4) et déplaçable axialement en direction de ce plateau de pression, à l'encontre de l'action de ressorts à lame disposés de manière solidaire du boîtier, au moyen d'un levier d'actionnement (8) s'appuyant unilatéralement contre le boîtier d'embrayage (4), comprenant un disque d'embrayage (11) pouvant être serré par l'au moins un embrayage à friction (3) au moyen de garnitures de friction (10) disposées entre le plateau de pression (5) et le plateau de pressage (6) et comprenant un système de rampes (14) disposé entre une surface d'appui (13) du levier d'actionnement (8) et le plateau de pression (5) et pourvu d'une bague de réglage (15) pouvant tourner dans la direction périphérique et comprenant des rampes (16) disposées dans la direction périphérique et des rampes conjuguées (17) disposées sur le plateau de pressage (6) de manière complémentaire à celles-ci, **caractérisé en ce qu'**un élément de détection (18) est reçu dans le boîtier d'embrayage (4) de manière fixe axialement et de manière à pouvoir tourner dans un sens de rotation au moyen d'une roue libre (21) s'accouplant graduellement et est relié à la bague de réglage (15) axialement et dans la direction périphérique à l'encontre de l'action d'un accumulateur d'énergie (20).

**2.** Ensemble embrayage (1) selon la revendication 1, **caractérisé en ce qu'**au moins un embrayage à friction (3) est un embrayage à friction (3) fermé par pression ou fermé par traction au moyen du levier d'actionnement.

**3.** Ensemble embrayage (1) selon la revendication 1 ou 2, **caractérisé en ce que** la roue libre (21) est formée par une bague à rampes (26) disposée de manière solidaire du boîtier et pourvue de rampes (27) disposées dans la direction périphérique et par des dents de blocage (25) prévues sur l'élément de détection (18) et en appui contre les rampes (27).

**4.** Ensemble embrayage (1) selon la revendication 3, **caractérisé en ce que** le nombre de rampes (27) et le nombre de dents de blocage (25) forment un rapport premier.

**5.** Ensemble embrayage (1) selon la revendication 4, **caractérisé en ce qu'**un rapport de division effectif sur la périphérie entre le nombre de dents de blocage (25) et le nombre de rampes (27) est inférieur à 1°, de préférence inférieur à 0,4°.

**6.** Ensemble embrayage (1) selon l'une quelconque des revendications 3 à 5, **caractérisé en ce que** dans chaque position de fonctionnement de l'au moins un embrayage à friction (3), au moins une dent de blocage (25) est disposée dans une position de blocage par rapport à une rampe (27).

**7.** Ensemble embrayage (1) selon l'une quelconque des revendications 1 à 6, **caractérisé en ce que** l'élément de détection (18) est formé par un ressort de réglage (22).

**8.** Ensemble embrayage (1) selon la revendication 7, **caractérisé en ce que** les dents de blocage (25) sont formées par des bras (24) élargis radialement du ressort de réglage (22).

**9.** Ensemble embrayage (1) selon la revendication 7 ou 8, **caractérisé en ce que** l'accumulateur d'énergie (20) agissant axialement entre la bague de réglage (15) et l'élément de détection (18) est formé par des ressorts à lame (23) faisant saillie hors du ressort de réglage (22), répartis sur la périphérie, orientés dans la direction périphérique et reliés à la bague de réglage (15).

10. Ensemble embrayage (1) selon l'une quelconque des revendications 1 à 9, **caractérisé en ce qu'**une détection d'un état d'usure s'effectue indépendamment d'un déplacement d'éloignement du levier d'actionnement (8).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008026421 A1
- DE 102008012865 A1
- DE 19844557